# FASCICULE DE BREVET EUROPEEN

(11) **EP 3 389 883 B1**
(45) Date de publication et mention de la délivrance du brevet: **09.12.2020**
(21) Numéro de dépôt: 16826396.0
(22) Date de dépôt: 16.12.2016
(51) Int. Cl.: B09B 3/00, B09B 5/00, F23G 5/027, F23G 5/08, F23G 5/16, F23G 5/46

(54) **PROCÉDÉ ET INSTALLATION DE TRAITEMENT DE DÉCHETS**
VERFAHREN UND ANLAGE ZUR ABFALLBEHANDLUNG
METHOD AND PLANT FOR WASTE TREATMENT

(30) Priorité: 17.12.2015 FR 1562625
(43) Date de publication de la demande: 24.10.2018
(73) Titulaire: Glasspower, 64600 Anglet (FR)
(72) Inventeur: BENICHOU, Anne, 33460 Arsac (FR); LAGOUTTE, Annie, 11600 Malves en Minervois (FR); MAURANCE, Xavier, 64600 Anglet (FR); PROOT, Jacques, Darlington, SC 29532 (US)
(74) Mandataire: Cabinet Beau de Loménie
(86) Numéro de dépôt international: PCT/FR2016/053508
(87) Numéro de publication internationale: WO 2017/103523

(56) Documents cités:
- EP-B1- 1 235 889
- FR-A1- 2 710 967
- FR-A1- 2 733 031

## Description

La présente invention concerne généralement un procédé et une installation de traitement de déchets carbonés pouvant comporter des charges minérales et/ou des contaminants potentiels.

L'invention trouve ses applications dans tous les domaines de la valorisation des déchets dont notamment dans le domaine de la valorisation des résidus de carbochimie ou de pétrochimie, des bois traités et plus généralement des déchets ultimes industriels dangereux ou non et/ou des déchets ménagers, comportant des charges carbonées et des charges minérales.

On sait que la combustion de déchets carbonés conduit à différents gaz en fonction des constituants initiaux et des conditions de température dans lesquelles les réactions chimiques ont lieu. Ces réactions sont plus ou moins complètes et conduisent en général à un mélange de gaz comprenant notamment du monoxyde de carbone (CO) et de l'hydrogène.

Ainsi, dans le brevet EP 1 235 889 ont été décrits un procédé et une installation de traitement de composés carbonés comportant des charges minérales et/ou des contaminants potentiels, dans des conditions réductrices, c'est-à-dire en présence d'une quantité de comburant (oxygène) insuffisante pour permettre la combustion de la partie carbonée de ces composés.

Le procédé décrit dans ce document antérieur permet de produire un gaz combustible de synthèse tout en éliminant, par inertage (par dissolution) dans un bain de verre fondu, les contaminants présents dans les composés carbonés traités.

Ainsi, ce procédé connu comprend essentiellement :
- la préparation d'un bain de verre en fusion à une température comprise entre 1 100°C et 1 600°C ;
- le chargement des déchets à traiter dans ledit bain de verre en fusion ;
- l'injection sous pression d'un comburant et éventuellement d'un combustible dans ledit bain de verre en fusion par l'intermédiaire d'au moins une lance verticale dont une extrémité est immergée dans ledit bain, ledit comburant étant introduit en une quantité molaire inférieure à la quantité molaire des composés carbonés, provoquant ainsi la combustion desdits déchets et la génération de gaz chauds de synthèse ;
- la mise en œuvre d'un échange thermique entre un fluide caloporteur et les gaz chauds de synthèse ;
- le refroidissement d'au moins une partie du verre en fusion de manière à le rendre solide en piégeant ainsi les éventuels contaminants présents dans les déchets traités.

Dans ce brevet EP 1 235 889, il est prévu que l'énergie calorique des gaz de synthèse soit au moins partiellement récupérée par la mise en œuvre d'un échange thermique avec un fluide caloporteur apte, par exemple, à actionner une turbine. Le document FR 2 733 031 A1 décrit un incinérateur d'ordures ménagères dans lequel une post-combustion des gaz peut-être effectuée.

Dans ce contexte, la présente invention vise à proposer un procédé et une installation de traitement de déchets reprenant les principes généraux décrits dans le brevet EP 1 235 889 mais permettant l'amélioration de l'échange thermique entre le fluide caloporteur et les gaz de synthèse issus de la combustion de la partie organique des déchets traités, et de minimiser la formation des oxydes d'azote.

Ainsi, selon un premier aspect, la présente invention a pour objet un procédé de traitement de déchets carbonés comportant des charges minérales et/ou des contaminants potentiels comprenant :
- la préparation d'un bain de verre en fusion à une température comprise entre 1 100°C et 1 600°C ;
- le chargement des déchets à traiter dans ledit bain de verre en fusion ;
- l'injection sous pression d'un comburant et éventuellement d'un combustible dans ledit bain de verre en fusion par l'intermédiaire d'au moins une lance (avantageusement verticale) dont une extrémité est immergée dans ledit bain, ledit comburant étant introduit en une quantité molaire inférieure à la quantité molaire des composés carbonés, provoquant ainsi la combustion desdits déchets et la génération de gaz chauds de synthèse ;
caractérisé en ce qu'il comprend en outre :
- la mise en œuvre d'un échange thermique entre un fluide caloporteur et les gaz chauds de synthèse dans des conditions permettant la récupération à la fois d'au moins une partie de leur énergie calorique et d'au moins une partie de l'énergie calorique dégagée par leur combustion, de l'air étant injecté de façon progressive ou séquentielle dans lesdits gaz au cours dudit échange thermique pour provoquer l'auto-inflammation du mélange desdits gaz et de l'air, chaque injection augmentant le taux de combustion desdits gaz.

Il a également été constaté que le procédé et l'installation faisant l'objet du brevet EP 1 235 889 ne sont pas optimisés, s'agissant notamment de la destruction des dioxines présentes dans les gaz de synthèse générés au cours du traitement.

Ainsi, il a été constaté que la hauteur du four contenant le bain de verre en fusion est insuffisante, compte tenu de la vitesse ascensionnelle (4 mètres/seconde) des gaz de synthèse générés, pour permettre l'élimination des dioxines et/ou les furannes présents dans ces gaz avant leur entrée dans la chambre permettant l'échange thermique avec le fluide caloporteur.

Ainsi, selon une caractéristique particulière, le procédé conforme à l'invention est encore caractérisé en ce que, préalablement à la mise en œuvre de l'échange thermique, il comprend le maintien des gaz chauds de synthèse pendant une durée supérieure à 2 secondes et à une température de 1 200 à 1 500°C pour détruire les dioxines et/ou les furannes présents dans lesdits gaz.

Selon une autre caractéristique particulièrement avantageuse du procédé conforme à l'invention, les gaz chauds de synthèse, au cours de la mise en œuvre de l'échange thermique précité, sont successivement :
a) refroidis jusqu'à une température supérieure à 750°C ;
b) mélangés à cette température à de l'air injecté pour provoquer l'auto-inflammation du mélange ainsi formé, la combustion des gaz en résultant s'accompagnant d'une élévation de leur température jusqu'à une valeur inférieure à 1 050°C ;
c) refroidis à nouveau jusqu'à une température supérieure à 750°C ;
   - les opérations b) et c) précitées étant répétées jusqu'à l'obtention d'un taux de combustion des gaz de synthèse proche ou égal à 100 % ;
   - les gaz de synthèse résiduels et l'air chaud environnant étant refroidis jusqu'à une température comprise entre 150 et 250°C.

Selon une autre caractéristique particulière de ce procédé, les déchets à traiter sont choisis parmi tous les déchets existants à l'exception des déchets radioactifs une partie de ses déchets devant être de nature organique, comme on le comprend.

Comme indiqué précédemment, le procédé conforme à l'invention est réalisé dans des conditions réductrices, c'est-à-dire en présence d'une quantité de comburant (oxygène) insuffisante pour permettre la combustion de la partie carbonée des déchets.

Avantageusement, le comburant est introduit dans le bain de verre en fusion en une quantité molaire comprise entre 0,2 et 0,8 fois la quantité molaire de la partie carbonée de déchets et éventuellement des combustibles.

Selon une autre caractéristique, le comburant précité est constitué d'air pur, d'oxygène ou d'un mélange des deux et est injecté sous une pression comprise entre 0,5 et 4 atmosphères, de préférence comprise entre 1 et 2 atmosphères.

Selon un mode de réalisation le procédé conforme à l'invention comprend en outre le refroidissement d'au moins une partie du verre en fusion de manière à le rendre solide.

Selon un deuxième aspect, la présente invention concerne une installation pour le traitement de déchets comprenant :
- une chambre de traitement formant four configurée pour contenir un bain de verre en fusion à une température comprise entre 1 100 et 1 600°C ;
- des moyens pour charger lesdits déchets à traiter dans ledit bain de verre en fusion ;
- des moyens éventuels pour charger des additifs de fusion ;
- des moyens pour injecter sous pression un comburant et éventuellement un combustible dans ledit bain de verre en fusion par l'intermédiaire d'au moins une lance dont l'extrémité est immergée dans ledit bain ;
- une chambre d'échange thermique et de combustion configurée pour récupérer au moins une partie de l'énergie calorique des gaz chauds générés dans ladite chambre de traitement et au moins une partie de l'énergie calorique dégagée par leur combustion; ladite chambre d'échange thermique et de combustion comprenant un serpentin véhiculant un fluide caloporteur et des moyens permettant d'injecter de l'air de façon séquentielle dans lesdits gaz au cours dudit échange thermique pour provoquer l'auto inflammation du mélange desdits gaz et de l'air ainsi formé .

Cette installation permet de mettre en œuvre le procédé décrit précédemment.

Selon une caractéristique particulière, cette installation selon l'invention comprend en outre :
- une chambre de séjour, disposée entre la chambre de traitement et la chambre d'échange thermique et de combustion précitées, configurée pour permettre de maintenir les gaz de synthèse générés dans ladite chambre de traitement pendant une durée supérieure à 2 secondes et à une température de 1 200 à 1 500°C pour permettre de détruire les dioxines et/ou les furannes éventuellement présents dans lesdits gaz.

Selon un mode de réalisation, la chambre de séjour comprend des moyens formant chicane, tel qu'en particulier une cloison s'étendant sensiblement transversalement à la direction de circulation des gaz et ce afin d'augmenter le temps de circulation et donc le temps de séjour de ces gaz à une température de 1 200 -1 500°C, conduisant à la destruction complète des dioxines et/ou furannes.

Avantageusement, la chambre d'échange thermique et de combustion précitée comprend, en suivant la direction de circulation des gaz de synthèse :
- une première zone configurée pour permettre le refroidissement desdits gaz chauds de synthèse, jusqu'à une température supérieure à environ 700°C ;
- une pluralité de zones de combustion des gaz configurées pour permettre d'injecter de l'air de façon séquentielle dans lesdits gaz au cours de leur échange thermique avec le fluide caloporteur en provoquant l'auto inflammation du mélange desdits gaz et de l'air ainsi formé ; le nombre de zones de combustion étant choisi de telle sorte que le taux de combustion des gaz de synthèse soit proche ou égale à 100 % ;
- une dernière zone configurée pour permettre le refroidissement desdits gaz de synthèse résiduels ou de l'air chaud sortant de la pluralité de zones de combustion précitée, de préférence jusqu'à une température d'environ 200°C.

Selon un mode de réalisation de l'invention, les zones précitées de la chambre d'échange thermique et de combustion sont séparées deux à deux successivement par une cloison percée d'au moins un orifice. Une telle configuration permet d'éviter tout retour de flamme, de façon à contrôler la combustion.

D'autres caractéristiques et avantages de l'invention ressortiront à la lecture de la description explicative qui va suivre faite en référence aux dessins annexés, dans lesquels :
- la figure 1 est une vue schématique générale d'une installation pour le traitement de déchets carbonés pouvant comporter des charges minérales et/ou des contaminants potentiels conforme à l'invention ;
- la figure 2 est un graphique illustrant l'évolution de la température de la combustion progressive des gaz de synthèse dans la chambre d'échange thermique et de combustion selon l'invention.

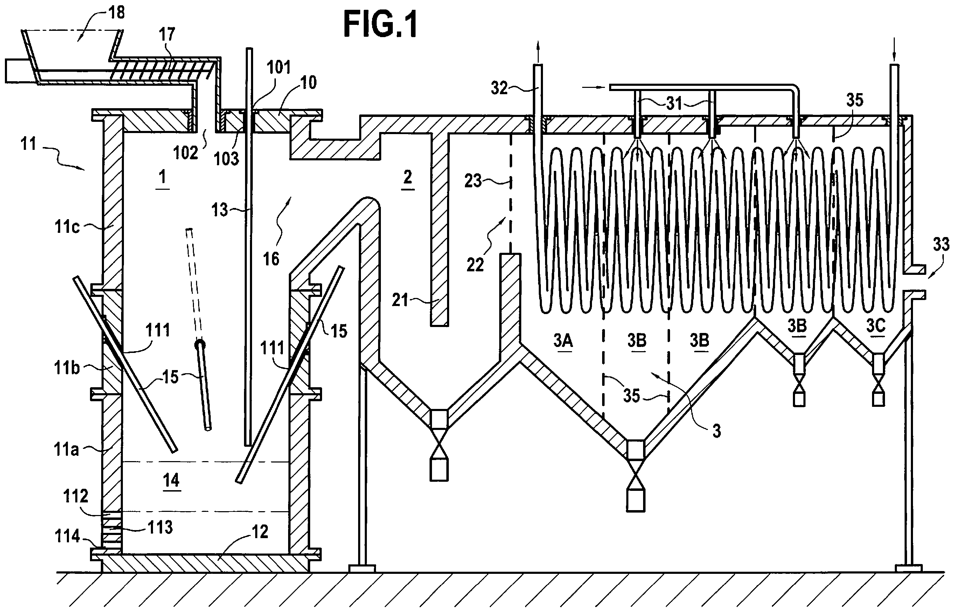

En référence à la figure 1, l'installation conforme à la présente invention comprend essentiellement trois parties :
- une chambre de traitement formant four 1 ;
- une chambre de séjour 2 ; et
- une chambre d'échange thermique et de combustion 3.

La chambre de traitement 1 est généralement constituée d'une paroi supérieure 10, d'une paroi latérale 11, avantageusement constituée de trois viroles 11a 11b et 11c et d'une paroi inférieure 12 délimitant, dans le mode de réalisation représenté, une enceinte cylindrique verticale dont la hauteur est supérieure au diamètre.

Cette enceinte peut avoir toute autre forme, comme par exemple une forme ovoïde ou elliptique.

Les dimensions de la chambre de traitement 1 formant four peuvent être variées et dépendent, comme on le comprend, des quantités de déchets à traiter.

A titre d'exemple, dans le cas d'un four cylindrique tel que représenté, le diamètre sera généralement supérieur à 3 m et sa hauteur comprise entre 6 et 12 m.

La chambre de traitement 1 est destinée à contenir, au moins dans sa partie basse, un bain de verre en fusion à une température comprise entre 1 100 et 1 600°C.

A cette fin, les parois 10, 11, 12 présenteront avantageusement une structure multicouche variant d'une paroi à une autre et qui sera décrite dans ce qui suit de l'intérieur vers l'extérieur de l'enceinte.

La paroi 10 sera ainsi constituée par exemple :
d'une couche interne de béton léger d'une épaisseur d'au moins 200 mm devant résister à une température comprise entre 1 100°C et 1 600°C ;
- d'une couche de laine céramique de 25 mm ;
- d'une paroi métallique en acier réfractaire d'environ 8 mm d'épaisseur.

La paroi latérale 11 peut être formée d'une seule pièce, constituée de l'intérieur vers l'extérieur de l'enceinte :
- d'une première couche de matériau réfractaire lourd d'une épaisseur d'environ 220 mm ;
- d'une deuxième couche de matériau réfractaire léger, d'une épaisseur d'environ 260 mm ;
- d'une troisième couche de laine céramique d'une épaisseur d'environ 25 mm
- d'une quatrième couche métallique en acier réfractaire d'une épaisseur d'environ 8 mm.

Selon une variante de réalisation préférée, la paroi latérale 11 présentera une construction en viroles et sera constituée de plusieurs éléments superposés verticalement (avantageusement trois) et assemblés ensemble de façon étanche par des brides. Un tel assemblage permet un remplacement aisé de toute section de la paroi latérale ayant subi une dégradation, ladite section pouvant être réparée en atelier avant d'être réutilisée. La durée de fonctionnement de l'installation s'en trouve nettement améliorée.

Chaque élément de cet assemblage aura une structure multicouche spécifique à sa fonction qui sera décrite dans ce qui suit en référence au mode de réalisation représenté à la figure 1, du bas vers le haut.

La paroi du premier élément ou virole 11a, destiné à constituer la partie en contact avec le bain de verre en fusion, sera ainsi constituée par exemple pour une hauteur d'environ 5 m :
- d'une première couche de matériau réfractaire lourd d'une épaisseur d'environ 220 mm ;
- d'une deuxième couche de matériau réfractaire léger, d'une épaisseur d'environ 260 mm ;
- d'une troisième couche de laine céramique d'une épaisseur d'environ 25 mm ;
- d'une quatrième couche métallique en acier réfractaire d'une épaisseur d'environ 8 mm.

La paroi du deuxième élément ou virole 11b, destiné à constituer la partie centrale, sera ainsi constituée, par exemple pour une hauteur d'environ 2,50 m du bas vers le haut :
- d'une première couche de brique à feu d'une épaisseur d'environ 220 mm ;
- d'une deuxième couche constituée de béton poreux léger ou de matériau réfractaire léger, d'une épaisseur d'environ 260 mm ;
- d'une troisième couche de laine céramique d'une épaisseur d'environ 20 mm ;
- d'une quatrième couche métallique en acier réfractaire d'une épaisseur d'environ 5 mm.

La paroi du troisième élément ou virole 11c, destiné à constituer la partie haute du four, sera ainsi constituée, par exemple pour une hauteur d'environ 5 m du bas vers le haut :
- d'une première couche de briques réfractaires ou en béton, d'une épaisseur d'environ 220 mm,
- d'une deuxième couche constituée de béton poreux léger ou de matériau réfractaire léger, d'une épaisseur d'environ 260 mm ;
- d'une troisième couche de béton cellulaire, d'une épaisseur d'environ 20 mm ;
- d'une quatrième couche métallique en acier réfractaire d'une épaisseur d'environ 5 mm.

La paroi 12 présentera de préférence une structure multicouche identique à celle de la paroi de la virole 11a décrite ci-dessus.

Les matériaux réfractaires lourds susceptibles d'être utilisés dans le cadre de l'invention sont généralement de type silico-alumineux contenant éventuellement du chrome et dont le poids spécifique est de l'ordre de 1 700 kg/m³ à 3 000 kg/m³. Leur composition consiste généralement en un mélange d'Al₂O₃, de SiO₂, de Fe₂O₃, lié par un ciment de type oxyde de calcium (CaO). Ces matériaux présentent une température limite d'utilisation pouvant aller jusqu'à 1 800°C selon la nature du liant et leurs coefficients de conductibilité thermique sont très élevés. Un autre type de réfractaire qui peut être utilisé est le chrome-magnésie qui a des propriétés physiques proches de ces matériaux silico-alumineux et une meilleure résistance chimique.

Comme on le comprend, ces matériaux seront utilisés aux endroits soumis aux contraintes de température les plus élevées, et en particulier aux parties destinées à être au contact du verre en fusion ou ses projections.

Les matériaux réfractaires légers (ou isolants intermédiaires) susceptibles d'être utilisés dans le cadre de l'invention sont des matériaux dont le poids spécifique varie de 1100 kg/m³ à 1 600 kg/m³. Il s'agit également de matériaux de type silico-alumineux.

Bien que dans un mode de réalisation préféré de l'invention certaines couches sont constituées exclusivement de matériau réfractaire léger, de telles couches peuvent être éventuellement substituées au moins en partie par une couche de matériau isolant ou de béton poreux, également constituée de matériaux de type silico-alumineux, dont le poids spécifique varie de 400 kg/m³ à 1 000 kg/m³.

De tels matériaux présentent une température maximale d'utilisation généralement inférieure, ou offrent à température égale une résistance mécanique insuffisante et ne peuvent être utilisés en lieu et place des couches destinées à venir au contact du verre fondu.

Le verre susceptible d'être utilisé dans le cadre de la présente invention peut être constitué de tout matériau inorganique amorphe comportant notamment :
- des oxydes silicatés et en particulier la silice (SiO₂) avantageusement entre 30 et 55 % en poids (de préférence 35 %) ;
- des oxydes alcalins, en particulier Na₂O, K₂O, Li₂O, ou alcalinoterreux (CaO, BaO, MgO) avantageusement entre 15 et 25 % en poids ; et
- de l'oxyde de fer (FeO) avantageusement, entre 25 et 45 % en poids (de préférence 45 %).

Des additifs de fusion et en particulier des fondants pourront être ajoutés, éventuellement en cours de fonctionnement, pour maintenir une composition constante du verre.

La paroi supérieure 10 de la chambre de traitement comporte une ouverture 101 permettant le passage et le déplacement une lance principale 13 destinée pour partie à injecter, de préférence sous pression, un comburant et éventuellement un combustible et pour autre partie à injecter les déchets pulvérulents, dans le bain de verre en fusion 14. L'ouverture 101 est pourvue de moyens d'étanchéité 103 constitués par exemple de joints mécaniques ou de manchons en caoutchouc.

La lance principale 13 est disposée avantageusement de façon verticale ou sensiblement verticale et de préférence excentrée.

Selon une variante de réalisation non représentée, la chambre de traitement 1 peut être équipée de plusieurs lances principales ayant chacune de préférence la même disposition avantageusement verticale excentrée.

De préférence, la chambre de traitement 1 sera en outre équipée d'une pluralité de lances secondaires 15 (de préférence de 3 à 5) pénétrant par des ouvertures 111 ménagées à cet effet dans la paroi latérale 11. Ces lances secondaires 15 sont conformées et disposées pour permettre de brasser le bain de verre fondu et d'éviter tout risque de formation d'un radeau de déchets à la surface du bain. Par ailleurs, ces lances secondaires apportent l'essentiel de l'oxygène nécessaire à la formation du syngaz.

L'utilisation d'une multitude de lances secondaires permet en outre d'améliorer le rendement globale de l'installation conforme à l'invention.

Selon un mode de réalisation préféré, ces lances secondaires 15, avantageusement au nombre de trois, seront disposées de façon oblique, selon une direction formant un angle compris entre 45 et 60° par rapport à la verticale, et immergées dans le bain de verre en fusion à des hauteurs variables pour assurer un brassage efficace du bain de verre fondu (voir figure 1).

Chaque lance 13, 15 est généralement constituée d'un tube cylindrique externe creux constitué d'un alliage d'acier, le diamètre des lances secondaires 15 étant généralement plus important que celui de la (ou des) lance(s) verticale(s) 13.

La lance 13 peut éventuellement comporter un tube cylindrique interne disposé à l'intérieur du tube externe, de préférence de façon coaxiale, permettant de transporter le combustible ou des déchets pulvérulents. Ce tube cylindrique interne est avantageusement légèrement plus court que le tube externe et peut être suivi par des déflecteurs d'homogénéisation (mélangeur statique).

Dans le cadre de la présente invention, on entend par « pulvérulent » tout matériau se présentant sous forme de poudre présentant un diamètre inférieur à 1 ou 2 mm.

Des exemples de déchets pulvérulents pouvant être véhiculés par la lance principale 13 comprennent notamment les matériaux suivants :
- farine, poussière de bois, poudre de peinture, poudre d'extincteur, noir de carbone, poudre de toner cendres, suie, poussières de filtration (REFIOM), ciments, sable fillérisés (sable de calibre 0/2 ou 0/4 contenant jusqu'à 20% - et parfois plus - de fines, par opposition au sable lavé.), chaux, tous les déchets de ponçage (colle, colles amiante, métal.), tous les déchets de sablage, acide organique, alumine, amiante, antimoine, argiles, bentonite, bioxyde de manganèse, bois (sciures et farine), carbonate de calcium, cellulose et dérivés cellulosiques, céréales moulues, charbon, chaux (vive et éteinte), chrome (sels et oxydes), colorants organiques, diatomées, engrais fer (oxydes de), graphite-carbone, gypse-plâtre, kaolin, magnésium (carbonate et oxyde), matières plastiques, métaux en poudre, perlite, inférieur à 2 mm, phosphates, produit pharmaceutique, silice-silicates, soufre, sucre, talc, vermiculite, inférieur à 2 mm, etc., ainsi que les résidus d'épuration des gaz obtenus après combustion.

Les déchets pulvérulents étant injectés directement et continûment via une lance au cœur du bain de verre fondu, tout risque d'explosion est ainsi empêché.

Chaque lance principale 13 comporte à son extrémité opposée à celle destiné à être immergée dans le bain de verre fondu un dispositif non représenté d'alimentation sous pression en comburant/combustible, par exemple par l'intermédiaire d'un conduit flexible.

A titre d'exemple, la lance principale 13 présente un diamètre de 75 mm et permet d'injecter le comburant et éventuellement un combustible à une pression allant jusqu'à trois atmosphères.

Les lances secondaires périphériques 15 présentent un diamètre d'environ 150 mm et permettent l'injection d'air à une pression limitée à une atmosphère relative.

La paroi supérieure 10 de la chambre 1 est également pourvue d'une ouverture 102 permettant le chargement des déchets à traiter, cette ouverture 102 étant avantageusement pourvue de moyens d'étanchéité tel qu'un sas. Cette ouverture 102 de chargement des déchets à traiter communiquera, par exemple par l'intermédiaire d'une vis sans fin 17 (avantageusement hermétiquement reliée à la chambre de traitement 1 et munie d'un système de chauffage), avec une trémie 18 montée à l'extérieur de la chambre de traitement 1, comme cela est décrit dans le brevet EP 1 235 889.

Dans le cas où les déchets pulvérulents sont suffisamment secs, ceux-ci peuvent être introduits dans le bain de verre fondu simultanément à l'injection du comburant par la lance principale 13.

Lors des phases de démarrage, il est recommandé d'injecter simultanément le comburant et un combustible par l'intermédiaire de la lance principale 13 afin de produire une flamme qui préchauffera le four et/ou le maintiendra à température pendant des périodes d'arrêt.

Ce combustible peut être du gaz ou du fioul et le comburant sera généralement de l'air, de l'oxygène ou un mélange des deux.

La chambre de traitement 1 comporte également une ouverture 16 ménagée dans sa paroi latérale 11, située de préférence au voisinage de la paroi supérieure 10 de la chambre 1. Cette ouverture 16 est conformée pour permettre l'échappement des gaz générés dans la chambre 1 au cours du traitement.

Cette ouverture d'échappement des gaz 16 communique avec la chambre de séjour 2 qui sera décrite ultérieurement.

La chambre de traitement 1 comporte également dans la partie inférieure de la paroi latérale 11 une ouverture 112 débouchant directement dans un chenal véhiculant un fort courant d'eau.

Une partie du verre fondu peut être coulée dans ce chenal en obtenant ainsi un sable.

Alternativement, le verre peut être coulé dans une cuve d'eau en le laissant tomber d'une hauteur d'environ 3 mètres, de telle façon que le verre puisse acquérir une vélocité suffisante pour pénétrer dans l'eau sans éclater à la surface. On obtient ainsi des nodules de 15 à 30 millimètres de diamètre qui seront concassés pour donner des agrégats pour béton.

Selon une autre variante, l'ouverture 112 débouche dans un réservoir ou avant-creuset non représenté, attenant à la partie inférieure de la chambre de traitement 1, et permettant de prélever une partie du verre en fusion formée après addition des déchets à traiter et des éventuels additifs de fusion, et d'en abaisser la température de manière à la rendre solide, en piégeant des éventuels contaminants présents dans les déchets.

A titre d'exemple, l'ouverture 112 de coulée de verre en fusion est généralement disposée à une hauteur de 50 cm (mesurée en partant de la paroi inférieure 12).

Le réservoir ou avant-creuset, de conception connue, est ouvert dans sa partie supérieure délimitée par une paroi dont le bord supérieur est sensiblement au-dessus du niveau moyen du bain de verre en fusion dans la chambre de traitement 1. Comme on le comprend, le verre en fusion peut ainsi s'écouler au travers de l'ouverture 112 pour remplir le réservoir jusqu'à une hauteur sensiblement égale à celle du verre fondu dans la chambre de traitement 1.

La partie supérieure de la paroi de ce réservoir comporte en outre un chenal pouvant être obturé, notamment par de l'argile, entre deux coulées successives de verre. Ce chenal ainsi obturé peut être percé mécaniquement ou thermiquement.

On pourra se référer au document EP 1 235 889 pour une description plus précise de cette partie de l'installation.

La chambre de traitement 1 peut également comporter, au niveau de la paroi inférieure 12 une ouverture 113 (obturée en fonctionnement) permettant notamment de vidanger la chambre pour son entretien.

La chambre de traitement 1 peut également comporter, au niveau de la paroi inférieure 12 une ouverture 114, située entre les ouvertures 112 et 113, obturée en fonctionnement, permettant la vidange des métaux non-ferreux contenus dans les intrants.

La chambre de séjour 2 est généralement disposée entre la chambre de traitement 1 et la chambre d'échange thermique et de combustion 3 qui sera décrite ultérieurement.

Cette chambre de séjour communique par l'ouverture 16 avec la chambre de traitement 1 et présente une configuration adaptée pour permettre de maintenir les gaz chauds de synthèse générés dans la chambre de traitement 1 pendant une durée et à une température suffisante pour garantir la destruction totale des dioxines et/ou furannes présents dans lesdits gaz.

Les gaz de synthèse chauds (1 200 à 1 500°C) générés dans la chambre de traitement 1 par la combustion de la partie organique des déchets à traiter peuvent contenir des dioxines et furannes. En effet, compte tenu de la vitesse ascensionnelle des gaz de synthèse et de la hauteur (limitée pour des raisons d'encombrement) de ladite chambre de traitement, il a été constaté que les particules organiques présentes dans la chambre de traitement 1 n'ont généralement pas le temps d'être entièrement détruites.

Selon la présente invention, la chambre de séjour 2 garantit une destruction totale de ces dioxines et furannes.

Selon une caractéristique particulière, la chambre de séjour 2 comprend des moyens formant chicane, de façon à imposer un parcours en zigzag aux gaz la traversant afin d'augmenter le temps de séjour et de les maintenir en tout état de cause pendant une durée supérieure à 2 secondes et à une température de 1 200 à 1 500°C à l'intérieur de la chambre de séjour 2, pour garantir la destruction totale des dioxines et furannes.

Dans un mode de réalisation préféré, la chambre de séjour présente une forme cylindro-conique et comporte une cloison 21 s'étendant sensiblement transversalement à la direction de circulation des gaz, c'est-à-dire parallèlement à l'axe longitudinal de la chambre de séjour 2, sur une majeure partie de la hauteur de cette dernière et ce afin d'augmenter le temps de circulation et donc le temps de séjour de ces gaz à une température de 1 200 -1 500°C, conduisant à la destruction complète des dioxines et/ou furannes.

Les parois définissant la chambre de séjour 2 présentent une structure multicouche identique à celle décrite précédemment en référence à la paroi 11c de la chambre de traitement 1.

A titre d'exemple, la hauteur de la chambre de séjour 2 peut être de l'ordre de 5 à 10 m.

Les gaz de synthèse chauds se déplaçant à une vitesse d'environ 4 m/s, leur temps de circulation supérieur à 2 secondes dans la chambre de séjour 2 où la température est généralement de l'ordre de 1 200 à 1 500°C, garantit une destruction totale des dioxines et furannes.

La chambre de séjour 2 est avantageusement équipée dans sa partie inférieure d'un purgeur à haute température permettant d'évacuer d'éventuelles poussières qui vont sédimenter dans ladite chambre. Ces poussières peuvent être réinjectées au cœur du bain de verre fondu.

La paroi latérale de la chambre de séjour 2 comporte en outre une ouverture 22 communiquant avec la chambre d'échange thermique et de combustion 3.

D'une façon générale, la chambre d'échange thermique et de combustion 3 comprend, en suivant la direction de circulation des gaz de synthèse :
- une première zone 3A configurée pour permettre le refroidissement desdits gaz chauds de synthèse, jusqu'à une température supérieure à environ 750°C ;
- une pluralité de zones 3B de combustion des gaz comprenant chacune des moyens d'injection 31 d'air ;
- une dernière zone 3C configurée pour permettre le refroidissement des gaz de synthèse résiduels ou de l'air chaud sortant de la pluralité de zones de combustion 3B, de préférence jusqu'à une température d'environ 200°C.

La chambre d'échange thermique et de combustion 3 est pourvue d'un serpentin 32 véhiculant un fluide caloporteur, tel que par exemple de l'eau, et traversant les zones 3A, 3B et 3C.

Les zones 3A, 3B dans sa pluralité et 3C sont délimitées par une paroi percée 35, ou septum, permettant le passage des gaz à une température de 1 050°C au maximum et constituée de matériaux isolants ou bétons poreux.

Le fluide caloporteur circule à contrecourant à l'intérieur du serpentin 32, c'est-à-dire dans une direction opposée à la direction de circulation des gaz.

Ce fluide caloporteur est de préférence de l'eau qui donnera de la vapeur. Il peut également s'agir d'air comprimé qui subira une expansion thermique au cours de l'échange et permettra d'actionner une turbine.

Les moyens d'injection 31 sont conformés pour injecter de l'air de façon séquentielle dans les gaz au cours de leur échange thermique avec le fluide caloporteur en provoquant l'auto-inflammation du mélange desdits gaz et de l'air ainsi formé.

L'air de combustion sera injecté par un ventilateur non représenté avec une vélocité suffisante pour permettre une pénétration et un bon mélange avec les gaz à brûler, que l'homme du métier déterminera aisément. L'injection en chaque point sera ajustée par exemple de façon connue en soi au moyen d'une vanne modulante contrôlée par des thermocouples.

A titre d'exemple, les gaz de synthèse entrent dans la zone 3A à une température de l'ordre de 1 200°C et sont refroidis par le fluide caloporteur jusqu'à une température d'environ 800°C avant d'entrer dans la première zone de combustion 3B.

Dans chaque zone de combustion 3B, de l'air est injecté dans lesdits gaz de façon séquentielle (la fréquence des injections étant adaptée à la vitesse de déplacement des gaz), ce qui provoque une auto-inflammation.

Cette auto inflammation entraîne une élévation de la température des gaz de synthèse jusqu'à une valeur d'environ 1 000°C puis ces gaz refroidissent à une température d'environ 800°C au contact du fluide caloporteur avant d'entrer dans la zone de combustion suivante 3B.

Le nombre de zones de combustion 3B est choisi de telle sorte que le taux de combustion des gaz de synthèse soit d'au moins 90 %, de préférence proche de 100 % ou égale à 100 % avant l'arrivée dans la dernière zone 3C.

L'air sera injecté, dans chaque zone de combustion 3B, en une quantité telle que la température générée par l'auto-inflammation dans chacune des zones de combustion 3B reste inférieure à 1 050°C afin de limiter la formation d'oxydes d'azote.

A cet effet, chaque zone de combustion 3B sera équipée d'une sonde de température contrôlant une vanne modulante introduisant l'air de combustion dans ladite zone.

De façon générale, on évitera également de refroidir les gaz dans les zones de combustion 3B à une température inférieure à 650°C pour éviter l'apparition de suie tant qu'il reste du CO dans le gaz.

Dans l'exemple illustré à la figure 1, l'installation comporte trois zones de combustion 3B.

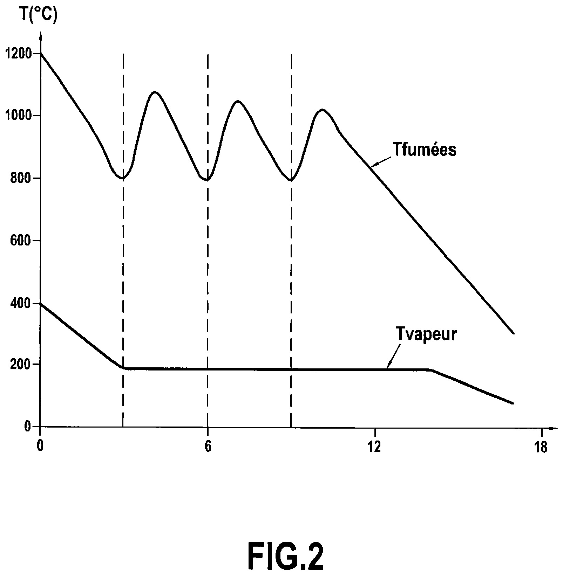

On a représenté à la figure 2 les variations de température des gaz de synthèse et du fluide caloporteur (eau-vapeur) lors de leur passage à l'intérieur de la chambre d'échange thermique et de combustion selon l'invention.

Les gaz de synthèse résiduels ou l'air chaud entrant dans la zone 3C sont refroidis jusqu'à une température d'environ 200°C à 300°C pour être conduits via une ouverture 33 vers un dispositif d'épuration non représenté.

Cette zone sera équipée de moyens permettant de pulvériser du carbonate de sodium ou éventuellement du carbonate de calcium ou de la chaux afin de piéger le chlore gazeux, l'arsenic, le soufre, et les faire précipiter pour les réinjecter au sein du bain de verre fondu via la lance principale 13 où ils seront directement dissous dans la matrice du verre amorphe.

Cette zone sera aussi équipée de moyens permettant l'injection d'eau oxygénée afin de provoquer le cas échéant la précipitation du mercure sous forme d'oxyde de mercure. Celui-ci sera directement injecté au sein du bain de verre fondu, via la lance principale 13 et sera directement dissout dans la matrice du verre amorphe.

La zone 3A sera également équipée de moyens permettant l'injection d'un mélange d'eau et d'urée (de préférence en une quantité de 32,5 %) afin de réduire les NOx en azote N₂ qui sera évacué par la cheminée.

Le fluide caloporteur circulant dans le serpentin 32 entre dans la dernière zone 3C sous une pression qui sera choisie en fonction de l'application envisagée. Par exemple pour de la vapeur, on recevra de l'eau à 80°C et à une pression de 12 à 100 bars. Ce fluide traverse les zones de combustion 3B puis la première zone de refroidissement 3A à contre-courant pour sortir sous forme de vapeur à une température de l'ordre de 300 à 500°C selon l'application envisagée. Dans le cas d'une turbine, on recevra de l'air à 300°C et à 10 bars. Il en sortira à 950°C.

L'invention va maintenant être illustrée à l'aide d'un exemple.

Cet exemple vise à illustrer la valeur de production de vapeur obtenue à l'aide de l'installation conforme à l'invention, à partir d'un mélange donné de cinq déchets, introduit dans le bain de verre fondu.

Ce mélange est constitué de :
- CSR (Combustibles Solides de Récupération) obtenus après une phase de broyage et de tri manuel et densimétrique de déchets non dangereux composés en majorité d'encombrants de déchets non dangereux en mélanges et de déchets d'activités économiques. Le CSR est produit à partir de la fraction non valorisable issue de ce tri ;
- REFIOM (Résidus d'Epuration des Fumées d'Incinération d'Ordures Ménagères) provenant d'une unité de traitement et valorisation énergétique de déchets ménagers et assimilés. Les REFIOM sont classés déchets dangereux ;
- OM (Ordures Ménagères) provenant d'une unité de traitement et de valorisation énergétique des déchets ménagers et assimilés où la séparation à la source des emballages et du verre a été pratiquée ;
- BOUES HYDROCARBURÉES telles que celles que l'on peut trouver auprès d'un professionnel de la maintenance industrielle et portuaire et de la collecte des déchets dangereux et non dangereux. Elles sont issues d'activités d'entretien des pistes de lavage de véhicules et d'entretien des déshuileurs débourbeurs de station de distribution de carburants ;
- DASRI (Déchets d'Activités de Soins à Risque Infectieux) banalisés ou non. Le processus de banalisation est un procédé connu qui permet de transformer ces déchets initialement dangereux de façon entièrement automatique par broyage et stérilisation par vapeur d'eau. Le produit final est constitué de broyats stérilisés (granulométrie < 4 cm), assimilables aux ordures ménagères (OM) qui peuvent rejoindre la filière des déchets urbains.

L'analyse élémentaire de ces déchets est reportée dans le tableau 1 ci-dessous :

**TABLEAU 1**

| Charge | Humidité % | C% | H% | O% | PCI kcal |
|---|---|---|---|---|---|
| CSR | 7,4 | 47,57 | 6,81 | 44,65 | 4133 |
| REFIOM | 3,0 | 2,30 | 1,00 | 0 | 425 |
| OM | 30,9 | 48,50 | 6,60 | 33,80 | 5458 |
| Boues hvdro | 25,3 | 22,80 | 3,10 | 7,30 | 2794 |
| DASRI | 39,5 | 69,30 | 11,00 | 8,23 | 6981 |

Dans ce tableau, PCI désigne le pouvoir calorifique inférieur exprimé en kilocalories.

### a) préparation d'un bain de verre fondu :

Dans cet exemple, on a utilisé un four de 3 mètres de diamètre et de 12,50 mètres de haut tel que décrit précédemment.

Ce four à vide a été préchauffé pendant une durée de 2 heures environ jusqu'à une température d'environ 1 200°C, au moyen d'un brûleur d'appoint descendu dans le four au bout d'un câble.

Lorsque la température à l'intérieur du four a atteint environ 1 200°C, on a introduit lentement du verre provenant d'un vitrifiât granulé lors d'une coulée précédente.

Durant cette étape, la température est maintenue à environ 1 200°C au moyen de la lance principe 13 délivrant une flamme provenant de la combustion d'un mélange d'air et de gaz naturel, dans un rapport sous-stœchiométrique de 0,9.

Quand le niveau de verre en fusion à l'intérieur du four a atteint une hauteur de 50 cm, les 3 lances secondaires 15 ont été immergées dans le bain de verre en fusion afin de maintenir une température de 1 200°C. Les flammes submergées dans le bain de verre donnent une excellente efficacité au procédé et évite la formation d'un radeau à la surface du verre en fusion.

### b) Introduction du mélange de déchets

Dans cet exemple, on a utilisé un mélange de déchets dont les proportions respectives de chacun de ces déchets sont de 15,6 % de CSR, 3,1 % de REFIOM, 40,7 % d'OM, 21,9 % de boues hydrocarburées et 18,7 % de DASRI, présentant l'analyse élémentaire reportée dans le tableau 1.

Les données ci-dessus supposent un régime de consommation de 4 167 kg/h de mélange.

**TABLEAU 2**

| Charge | Kg/h | t/an |
|---|---|---|
| CSR | 651 | 5 000 |
| REFIOM | 130 | 1 000 |
| OM | 1 693 | 13 000 |
| Boues hydrocarburées | 911 | 7 000 |
| DASRI | 781 | 6 000 |
| **total** | **4 167** | **32 000** |

Ces 4167 kg/h (qui contiennent 1337 kg de carbone et 192 kg d'hydrogène) sont alimentés dans le four avec injection de 8 427 Nm³/h d'air.

La composante minérale de ce mélange nécessite l'ajout de quelques fondants, principalement du fer (sous forme de mitraille fine) à raison de 390 kg/h pour obtenir la composition optimale du verre.

Après 24 heures de production, le niveau du four a atteint 1,8 m et le verre fondu obtenu à la composition suivante :
- SiO₂ : 30 % en poids ;
- FeO : 44 % en poids
- oxydes alcalins et alcalino-terreux : 25 % en poids ;
- composants mineurs : 0,5 % en poids

Les 3 lances secondaires 15 ont alors été relevées pour arrêter l'agitation du verre tout en maintenant la température du bain pendant une durée d'environ 10 minutes.

On a ainsi obtenu une production de 940 kg/h soit 22,560 tonnes/jour de verre fondu, qui ont été prélevées en une seule coulée toutes les 24 heures, en laissant un fond de bain de verre fondu d'une hauteur d'environ 50 cm dans le four.

### c) Bilan énergétique

**TABLEAU 3**

| | |
|---|---|
| % **O₂ dans l'air** | **21** |
| Nm³ gaz produit (humide) | **12 700** |

| Analvse humide | |
|---|---|
| H₂ % | 9,2 |
| CO % | 10,9 |
| CO₂ % | 8,8 |
| H₂O % | 18,7 |
| N₂ % | 52,4 |

Le gaz de synthèse (syngaz) produit a un PCI humide de 2,5 MJ/Nm³.

Dans cet exemple ce syngaz a été utilisé dans une installation conforme à l'invention, avec un mélange eau/vapeur circulant à contre-courant dans l'échangeur thermique.

Le gaz a été refroidi dans une première zone de l'échangeur jusqu'à une température de 700/800°C, puis de l'air a été introduit progressivement jusqu'à combustion complète, tout en évitant de dépasser 1 000°C.

Au total 6 676 Nm³/h d'air (avec 10 % d'excès) ont été utilisés.

Les fumées, après épuration, ont été évacuées à la cheminée à 200°C.

La récupération nette d'énergie sous forme de chaleur par refroidissement partiel du gaz suivi de sa combustion a été de 12,5 MWₜₕ (mégawatt thermique).

On constate ainsi que le procédé et l'installation conforme à la présente invention permettent d'améliorer de façon importante l'échange thermique entre le fluide caloporteur et les gaz de synthèse issus de la combustion de la partie organique des déchets traités.

En outre, les inventeurs ont constaté que le procédé conforme à la présente invention a permis d'éviter la formation des oxydes d'azote notamment du fait que la température générée par l'auto inflammation des gaz a été contrôlée pour rester en dessous de 1 050°C, température au-delà de laquelle des oxydes d'azote se forment.

## Revendications

1. Procédé de traitement de déchets carbonés pouvant comporter des charges minérales et/ou des contaminants potentiels, comprenant :
- la préparation d'un bain de verre en fusion à une température comprise entre 1 100°C et 1 600°C ;
- le chargement des déchets à traiter dans ledit bain de verre en fusion (14) ;
- l'injection sous pression d'un comburant et éventuellement d'un combustible dans ledit bain de verre en fusion par l'intermédiaire d'au moins une lance (13, 15) dont une extrémité est immergée dans ledit bain, ledit comburant étant introduit en une quantité molaire inférieure à la quantité molaire des composés carbonés, provoquant ainsi la combustion desdits déchets et la génération de gaz chauds de synthèse ;
**caractérisé en ce qu'**il comprend en outre :
- la mise en œuvre d'un échange thermique entre un fluide caloporteur et les gaz chauds de synthèse dans des conditions permettant la récupération à la fois d'au moins une partie de leur énergie calorique et d'au moins une partie de l'énergie calorique dégagée par leur combustion, de l'air étant injecté de façon séquentielle dans lesdits gaz au cours dudit échange thermique pour provoquer l'auto inflammation du mélange desdits gaz et de l'air, chaque injection augmentant le taux de combustion, ledit air étant injecté en quantité telle que la température générée par l'auto inflammation reste inférieure à 1 050°C afin de limiter la formation d'oxydes d'azote.

2. Procédé de traitement selon la revendication 1, **caractérisé en ce que**, préalablement à la mise en œuvre de l'échange thermique, il comprend le maintien des gaz chauds de synthèse pendant une durée supérieure à 2 secondes et à une température de 1 200 à 1 500°C pour détruire les dioxines et/ou les furannes éventuellement présents dans lesdits gaz.

3. Procédé de traitement selon la revendication 1 ou 2, **caractérisé en ce qu'**au cours de la mise en œuvre de l'échange thermique précité, les gaz chauds de synthèse sont successivement :
a) refroidis jusqu'à une température supérieure à 750°C ;
b) mélangés à cette température audit air injecté ;
c) refroidis à nouveau jusqu'à une température supérieure à 750°C ;
- les opérations b) et c) précitées étant répétées jusqu'à l'obtention d'un taux de combustion des gaz de synthèse proche ou égal à 100 % ;
- les gaz de synthèse résiduels et l'air chaud environnant étant refroidis jusqu'à une température comprise entre 150 et 250°C.

4. Procédé de traitement selon l'une des revendications 1 à 3, **caractérisé en ce que** les déchets à traiter sont choisis parmi tous les déchets existants à l'exception des déchets radioactifs.

5. Procédé de traitement selon l'une des revendications 1 à 3, **caractérisé en ce que** le comburant précité est constitué d'air pur, d'oxygène ou d'un mélange des deux et **en ce qu'**il est injecté sous une pression comprise entre 0,5 et 4 atmosphères.

6. Procédé de traitement selon l'une des revendications 1 à 5, **caractérisé en ce qu'**il comprend en outre le refroidissement d'au moins une partie du verre en fusion de manière à le rendre solide ;

7. Procédé de traitement selon l'une des revendications 1 à 6, **caractérisé en ce que** le comburant précité est introduit dans le bain de verre en fusion (14) en une quantité molaire comprise entre 0,2 et 0,8 fois la quantité molaire de la partie carbonée de déchets et éventuellement des combustibles.

8. Installation pour le traitement de déchets comprenant :
- une chambre de traitement (1) formant four configurée pour contenir un bain de verre en fusion (14) à une température comprise entre 1 100 et 1 600°C ;
- des moyens (17, 18) pour charger lesdits déchets à traiter dans ledit bain de verre en fusion (14) ;
- des moyens éventuels pour charger des additifs de fusion ;
- des moyens pour injecter sous pression un comburant et éventuellement un combustible dans ledit bain de verre en fusion (14) par l'intermédiaire d'au moins une lance (13,15) dont l'extrémité est immergée dans ledit bain, l'installation étant **caractérisée par le fait qu'**elle comprend en outre :
- une chambre d'échange thermique et de combustion (3) configurée pour récupérer au moins une partie de l'énergie calorique des gaz chauds générés dans ladite chambre de traitement (1) et au moins une partie de l'énergie calorique dégagée par leur combustion; ladite chambre d'échange thermique et de combustion (3) comprenant un serpentin (32) véhiculant un fluide caloporteur et des moyens (31) permettant d'injecter de l'air de façon séquentielle dans lesdits gaz au cours dudit échange thermique pour provoquer l'auto inflammation du mélange desdits gaz et de l'air ainsi formé, ledit air étant injecté en quantité telle que la température générée par l'auto inflammation reste inférieure à 1 050°C afin de limiter la formation d'oxydes d'azote.

9. Installation selon la revendication 8, **caractérisée en ce qu'**elle comprend en outre :
- une chambre de séjour (2), disposée entre la chambre de traitement (1) et la chambre d'échange thermique et de combustion (3) précitées, configurée pour permettre de maintenir les gaz de synthèse générés dans ladite chambre de traitement pendant une durée supérieure à 2 secondes et à une température de 1 200 à 1 500°C pour permettre de détruire les dioxines et/ou les furannes éventuellement présents dans lesdits gaz.

10. Installation selon la revendication 8 ou 9, **caractérisée en ce que** la chambre de séjour (2) comprend des moyens formant chicane, tel qu'en particulier une cloison (21) s'étendant sensiblement transversalement à la direction de circulation des gaz.

11. Installation selon l'une des revendications 8 à 10, **caractérisée en ce que** la chambre d'échange thermique et de combustion (3) précitée comprend, en suivant la direction de circulation des gaz de synthèse :
- une première zone (3A) configurée pour permettre le refroidissement desdits gaz chauds de synthèse, jusqu'à une température supérieure à environ 700°C ;
- une pluralité de zones (3B) de combustion des gaz configurées pour permettre d'injecter de l'air de façon séquentielle dans lesdits gaz au cours de leur échange thermique avec le fluide caloporteur en provoquant l'auto inflammation du mélange desdits gaz et de l'air ainsi formé ; le nombre de zones de combustion étant choisi de telle sorte que le taux de combustion des gaz de synthèse soit proche ou égale à 100 % ;
- une dernière zone (3C) configurée pour permettre le refroidissement desdits gaz de synthèse résiduels ou de l'air chaud sortant de la pluralité de zones de combustion (3B) précitée, de préférence jusqu'à une température d'environ 200°C.

12. Installation selon la revendication 11, **caractérisée en ce que** les zones (3A, 3B, 3C) précitées de la chambre d'échange thermique et de combustion (3) sont séparées deux à deux successivement par une cloison (35) percée d'au moins un orifice évitant tout retour de flamme, de façon à contrôler la combustion.

## Patentansprüche

1. Verfahren zur Behandlung kohlenstoffhaltiger Abfälle, die mineralische Füllstoffe und/oder potentielle Verunreinigungen enthalten können, umfassend:
- Herstellen eines Glasschmelzebads mit einer Temperatur zwischen 1100 °C und 1600 °C,
- Einfüllen der zu behandelnden Abfälle in das Glasschmelzebad (14),
- Einspritzen eines Oxidationsmittels und gegebenenfalls eines Brennstoffs unter Druck in das Glasschmelzebad mit Hilfe mindestens einer Lanze (13, 15), deren eines Ende in das Bad eingetaucht ist, wobei das Oxidationsmittel in einer molaren Menge eingeführt wird, die geringer ist als die molare Menge der kohlenstoffhaltigen Verbindungen, wodurch die Verbrennung der Abfälle und die Erzeugung heißer Synthesegase bewirkt wird,
**dadurch gekennzeichnet, dass** es ferner umfasst:
- das Durchführen eines Wärmeaustauschs zwischen einem Wärmeübertragungsfluid und den heißen Synthesegasen unter Bedingungen, die die Rückgewinnung sowohl mindestens eines Teils ihrer Wärmeenergie als auch mindestens eines Teils der durch ihre Verbrennung freigesetzten Wärmeenergie ermöglichen, wobei Luft während des Wärmeaustauschs aufeinanderfolgend in die Gase eingespritzt wird, um eine Selbstentzündung des Gemischs aus den Gasen und der Luft zu bewirken, wobei jede Einspritzung die Verbrennungsrate erhöht, wobei die Luft in einer solchen Menge eingespritzt wird, dass die durch die Selbstentzündung erzeugte Temperatur unter 1050 °C bleibt, um die Bildung von Stickstoffoxiden zu begrenzen.

2. Behandlungsverfahren nach Anspruch 1, **dadurch gekennzeichnet, dass** es vor dem Durchführen des Wärmeaustauschs das Halten der heißen Synthesegase während einer Zeitdauer von mehr als 2 Sekunden und auf einer Temperatur von 1200 bis 1500 °C umfasst, um die in den genannten Gasen gegebenenfalls vorhandenen Dioxine und/oder Furane zu zerstören.

3. Behandlungsverfahren nach Anspruch 1 oder 2, **dadurch gekennzeichnet, dass** während des Durchführens des vorgenannten Wärmeaustauschs die heißen Synthesegase nacheinander:
a) auf eine Temperatur über 750 °C abgekühlt werden,
b) bei dieser Temperatur mit der eingespritzten Luft vermischt werden und
c) wieder auf eine Temperatur über 750 °C abgekühlt werden,
- wobei die vorgenannten Vorgänge b) und c) wiederholt werden, bis eine Synthesegas-Verbrennungsrate von nahezu oder gleich 100 % erreicht ist,
- wobei die Restsynthesegase und die umgebende heiße Luft auf eine Temperatur zwischen 150 und 250 °C abgekühlt werden.

4. Behandlungsverfahren nach einem der Ansprüche 1 bis 3, **dadurch gekennzeichnet, dass** die zu behandelnden Abfälle aus allen existierenden Abfällen mit Ausnahme von radioaktiven Abfällen ausgewählt werden.

5. Behandlungsverfahren nach einem der Ansprüche 1 bis 3, **dadurch gekennzeichnet, dass** das vorgenannte Oxidationsmittel aus reiner Luft, Sauerstoff oder einem Gemisch aus beiden besteht und dass es bei einem Druck zwischen 0,5 und 4 Atmosphären eingespritzt wird.

6. Behandlungsverfahren nach einem der Ansprüche 1 bis 5, **dadurch gekennzeichnet, dass** es ferner das Abkühlen mindestens eines Teils des geschmolzenen Glases umfasst, um es zu verfestigen,

7. Behandlungsverfahren nach einem der Ansprüche 1 bis 6, **dadurch gekennzeichnet, dass** das vorgenannte Oxidationsmittel in das Glasschmelzebad (14) in einer molaren Menge zwischen dem 0,2- und 0,8-fachen der molaren Menge des kohlenstoffhaltigen Teils der Abfälle und gegebenenfalls der Brennstoffe eingeführt wird.

8. Anlage zur Behandlung von Abfällen, umfassend:
- eine Behandlungskammer (1), die einen Ofen bildet, der dazu konfiguriert ist, ein Glasschmelzebad (14) mit einer Temperatur zwischen 1100 und 1600 °C aufzunehmen,
- Mittel (17, 18) zum Einfüllen der zu behandelnden Abfälle in das Glasschmelzebad (14),
- optional Mittel zum Einfüllen von Schmelzzusätzen,
- Mittel zum Einspritzen eines Oxidationsmittels und gegebenenfalls eines Brennstoffs unter Druck in das Glasschmelzebad (14) mit Hilfe mindestens einer Lanze (13, 15), deren Ende in das Bad eingetaucht ist,
wobei die Anlage **dadurch gekennzeichnet ist, dass** sie ferner umfasst:
- eine Wärmeaustausch- und Verbrennungskammer (3), die dazu konfiguriert ist, mindestens einen Teil der Wärmeenergie der in der Behandlungskammer (1) erzeugten heißen Gase und mindestens einen Teil der durch ihre Verbrennung freigesetzten Wärmeenergie zurückzugewinnen, wobei die Wärmeaustausch- und Verbrennungskammer (3) eine Spule (32), die ein Wärmeübertragungsfluid befördert, und Mittel (31) zum aufeinanderfolgenden Einspritzen von Luft in die Gase während des Wärmeaustauschs umfasst, um die Selbstentzündung des so gebildeten Gemischs aus den Gasen und der Luft zu bewirken, wobei die Luft in einer solchen Menge eingespritzt wird, dass die durch die Selbstentzündung erzeugte Temperatur unter 1050°C bleibt, um die Bildung von Stickoxiden zu begrenzen.

9. Anlage nach Anspruch 8, **dadurch gekennzeichnet, dass** sie ferner umfasst:
- eine Verweilkammer (2), die zwischen der vorgenannten Behandlungskammer (1) und der Wärmeaustausch- und Verbrennungskammer (3) angeordnet und dazu konfiguriert ist, das Halten der in der Behandlungskammer erzeugten Synthesegase für eine Dauer von mehr als 2 Sekunden und auf einer Temperatur von 1200 bis 1500°C zu ermöglichen, um die Zerstörung der gegebenenfalls in den Gasen vorhandenen Dioxine und/oder Furane zu ermöglichen.

10. Anlage nach Anspruch 8 oder 9, **dadurch gekennzeichnet, dass** die Verweilkammer (2) Mittel umfasst, die eine Leitwand bilden, wie insbesondere eine Trennwand (21), die sich im Wesentlichen quer zur Strömungsrichtung des Gases erstreckt.

11. Anlage nach einem der Ansprüche 8 bis 10, **dadurch gekennzeichnet, dass** die vorgenannte Wärmeaustausch- und Verbrennungskammer (3), der Strömungsrichtung des Synthesegases folgend, umfasst:
- eine erste Zone (3A), die dazu konfiguriert ist, das Abkühlen der heißen Synthesegase auf eine Temperatur über etwa 700 °C zu ermöglichen,
- eine Mehrzahl von Gasverbrennungszonen (3B), die dazu konfiguriert sind, das aufeinanderfolgende Einspritzen von Luft in die Gase während ihres Wärmeaustauschs mit dem Wärmeübertragungsfluid zu ermöglichen, wodurch die Selbstentzündung des so gebildeten Gemischs aus den Gasen und der Luft bewirkt wird, wobei die Anzahl der Verbrennungszonen so gewählt wird, dass die Verbrennungsrate der Synthesegase nahe oder gleich 100 % ist,
- eine letzte Zone (3C), die dazu konfiguriert ist, das Abkühlen der Restsynthesegase oder der heißen Luft, die aus der vorgenannten Mehrzahl von Verbrennungszonen (3B) austreten, vorzugsweise auf eine Temperatur von etwa 200°C zu ermöglichen.

12. Anlage nach Anspruch 11, **dadurch gekennzeichnet, dass** die vorgenannten Zonen (3A, 3B, 3C) der Wärmeaustausch- und Verbrennungskammer (3) paarweise nacheinander durch eine Trennwand (35) getrennt sind, die von mindestens einer Öffnung durchbrochen ist, so dass jeglicher Flammenrückschlag verhindert wird, um so die Verbrennung zu kontrollieren.

## Claims

1. A method for treating carbon-containing waste that may comprise mineral fillers and/or potential contaminants, comprising:
- preparing a molten glass bath at a temperature between 1100°C and 1600°C;
- loading the waste to be treated into said molten glass bath (14);
- injecting a supporter of combustion and optionally a fuel under pressure into said molten glass bath by means of at least one lance (13, 15), one end of which is immersed in said bath, said supporter of combustion being introduced in a molar amount less than the molar amount of the carbon-containing compounds, thus causing combustion of said waste and generation of hot synthesis gases; **characterized in that** it further comprises:
- implementing heat exchange between a heat-transfer fluid and the hot synthesis gases in conditions allowing simultaneous recovery of at least part of their heat energy and at least part of the heat energy released by their combustion, air being injected sequentially into said gases during said heat exchange to cause self-ignition of the mixture of said gases and air, each injection increasing the degree of combustion, said air being injected in an amount such that the temperature generated by self-ignition remains below 1050°C in order to limit the formation of nitrogen oxides.

2. The method of treatment as claimed in claim 1, **characterized in that**, prior to carrying out heat exchange, it comprises holding the hot synthesis gases for a time greater than 2 seconds and at a temperature from 1200 to 1500°C to destroy the dioxins and/or furans optionally present in said gases.

3. The method of treatment as claimed in claim 1 or 2, **characterized in that** during execution of heat exchange, the hot synthesis gases are successively:
a) cooled to a temperature above 750°C;
b) mixed at this temperature with said injected air;
c) cooled again to a temperature above 750°C;
- the aforementioned operations b) and c) being repeated until a degree of combustion of the synthesis gases close to or equal to 100% is obtained;
- the residual synthesis gases and the hot surrounding air being cooled to a temperature between 150 and 250°C.

4. The method of treatment as claimed in one of claims 1 to 3, **characterized in that** the waste to be treated is selected from all existing wastes apart from radioactive waste.

5. The method of treatment as claimed in one of claims 1 to 3, **characterized in that** the aforementioned supporter of combustion consists of pure air, oxygen or a mixture of the two and **in that** it is injected at a pressure between 0.5 and 4 atmospheres.

6. The method of treatment as claimed in one of claims 1 to 5, **characterized in that** it further comprises cooling at least part of the molten glass so as to render it solid.

7. The method of treatment as claimed in one of claims 1 to 6, **characterized in that** the aforementioned supporter of combustion is introduced into the molten glass bath (14) in a molar amount between 0.2 and 0.8 times the molar amount of the carbon-containing part of the waste and optionally of the fuel.

8. A plant for treating waste comprising:
- a treatment chamber (1) forming a furnace configured to contain a molten glass bath (14) at a temperature between 1100 and 1600°C;
- means (17, 18) for loading said waste to be treated into said molten glass bath (14);
- optional means for loading melting additives;
- means for pressure-injecting a supporter of combustion and optionally a fuel into said molten glass bath (14) by means of at least one lance (13, 15), the end of which is immersed in said bath, the plant being **characterized in that** it further comprises:
- a heat-exchange and combustion chamber (3) configured for recovering at least part of the heat energy of the hot gases generated in said treatment chamber (1) and at least part of the heat energy released by their combustion; said heat-exchange and combustion chamber (3) comprising a coil (32) conveying a heat-transfer fluid and means (31) for injecting air sequentially into said gases during said heat exchange to cause self-ignition of the mixture of said gases and air thus formed, said air being injected in an amount such that the temperature generated by self-ignition remains below 1050°C in order to limit the formation of nitrogen oxides.

9. The plant as claimed in claim 8, **characterized in that** it further comprises:
- a holding chamber (2), arranged between the aforementioned treatment chamber (1) and heat-exchange and combustion chamber (3), configured to allow the synthesis gases generated in said treatment chamber to be held for a time greater than 2 seconds and at a temperature from 1200 to 1500°C to destroy the dioxins and/or furans optionally present in said gases.

10. The plant as claimed in claim 8 or 9, **characterized in that** the holding chamber (2) comprises baffle-forming means, such as in particular a partition (21) extending approximately transversely to the direction of circulation of the gases.

11. The plant as claimed in one of claims 8 to 10, **characterized in that** the aforementioned heat-exchange and combustion chamber (3) comprises, in the direction of circulation of the synthesis gases:
- a first zone (3A) configured to allow cooling of said hot synthesis gases to a temperature above about 700°C;
- a plurality of combustion zones (3B) of the gases configured to allow injection of air sequentially into said gases while they undergo heat exchange with the heat-transfer fluid, causing self-ignition of the mixture of said gases and air thus formed; the number of combustion zones being selected in such a way that the degree of combustion of the synthesis gases is close to or equal to 100%;
- a final zone (3C) configured to allow cooling of said residual synthesis gases or of the hot air leaving the aforementioned plurality of combustion zones (3B), preferably to a temperature of about 200°C.

12. The plant as claimed in claim 11, **characterized in that** the aforementioned zones (3A, 3B, 3C) of the heat-exchange and combustion chamber (3) are separated two at a time successively by a partition (35) having at least one opening preventing any flashback, so as to control combustion.
